# EUROPÄISCHE PATENTSCHRIFT

(11) **EP 1 346 424 B1**
(45) Veröffentlichungstag und Bekanntmachung des Hinweises auf die Patenterteilung: **19.05.2004**
(21) Anmeldenummer: 01272023.1
(22) Anmeldetag: 18.12.2001
(51) Int. Cl.: H01M 4/88, H01M 4/86, C25B 11/03

(54) **VERFAHREN ZUR HERSTELLUNG VON ELEKTRODEN, KOMPONENTEN, HALBZELLEN UND ZELLEN FÜR ELEKTROCHMISCHE ENERGIEWANDLER**
METHOD FOR PRODUCING ELECTRODES, COMPONENTS, HALF CELLS AND CELLS FOR ELECTROCHEMICAL ENERGY CONVERTERS
PROCEDE POUR LA PRODUCTION D'ELECTRODES, DE COMPOSANTS, DE DEMI-CELLULES ET DE CELLULES POUR DES CONVERTISSEURS D'ENERGIE ELECTROCHIMIQUES

(30) Priorität: 22.12.2000 DE 10064462
(43) Veröffentlichungstag der Anmeldung: 24.09.2003
(73) Patentinhaber: MTU CFC Solutions GmbH, 85521 Ottobrunn (DE)
(72) Erfinder: STEINFORT, Marc, 85737 Ismaning (DE); BEDNARZ, Marc, 82024 Taufkirchen (DE)
(74) Vertreter: Winter, Josef
(86) Internationale Anmeldenummer: PCT/EP2001/014911
(87) Internationale Veröffentlichungsnummer: WO 2002/052665

(56) Entgegenhaltungen:
- US-A- 4 287 232
- US-A- 4 555 324
- PATENT ABSTRACTS OF JAPAN vol. 008, no. 070 (E-235), 3. April 1984 (1984-04-03) & JP 58 218766 A (TOKYO SHIBAURA DENKI KK), 20. Dezember 1983 (1983-12-20)
- PATENT ABSTRACTS OF JAPAN vol. 1995, no. 04, 31. Mai 1995 (1995-05-31) & JP 07 022035 A (TANAKA KIKINZOKU KOGYO KK), 24. Januar 1995 (1995-01-24)
- PATENT ABSTRACTS OF JAPAN vol. 011, no. 023 (E-473), 22. Januar 1987 (1987-01-22) & JP 61 193368 A (TOSHIBA CORP), 27. August 1986 (1986-08-27)

## Beschreibung

Die Erfindung betrifft ein Verfahren zur Herstellung von Elektroden, Komponenten, Halbzellen und Zellen für elektrochemische Energiewandler.

Herkömmlicherweise bedeutet die Herstellung von Elektroden, Komponenten, Halbzellen und Zellen für elektrochemische Energiewandler, wie für Brennstoffzellenanordnungen oder Elektrolysezellenanordnungen, aufwendige und damit kostenintensive Prozesse, bei denen die Komponenten einzeln in verschiedenen Fertigungsverfahren hergestellt und zum Teil aufwendigen Hochtemperaturprozessen wie Brand, Sinterung, Schmelzbefüllung unter kontrollierter Gasatmosphäre unterzogen werden. Zur Herstellung von Brennstoffzellen oder Zellen für Elektrolyseanwendungen werden beispielsweise die Elektroden und Komponenten durch Foliengießen und trockene Schüttungsverfahren hergestellt und nach einer Anzahl von weiteren Prozess- und Behandlungsschritten miteinander zu Halbzellen, Zellen und Zellstapeln kombiniert.

Die Aufgabe der Erfindung ist es, ein vereinfachtes Verfahren zur Herstellung von Elektroden, Komponenten, Halbzellen und Zellen für elektrochemische Energiewandler anzugeben.

Diese Aufgabe wird durch das im Anspruch 1 angegebene Verfahren gelöst.

Vorteilhafte Ausführungsformen des erfindungsgemäßen Verfahrens sind in den Unteransprüchen gekennzeichnet.

Durch die Erfindung wird ein Verfahren zur Herstellung von Elektroden, Komponenten, Halbzellen und Zellen für elektrochemische Energiewandler geschaffen. Erfindungsgemäß enthält das Verfahren die folgenden Verfahrensschritte:
a) Herstellen eines flächenartigen porösen Trägermaterials;
b) Aufbringen von zumindest einer Schicht eines Elektrodenmaterials und/oder einer Schicht eines Katalysatormaterials auf das poröse Trägermaterial;
c) Walzen oder Pressen des porösen Trägermaterials zusammen mit der darauf aufgebrachten Schicht des Elektrodenmaterials und/oder der Schicht des Katalysatormaterials auf eine vorgegebene Dicke unter Erzeugung einer ebenen und glatten oder strukturierten Oberfläche.

Ein wesentlicher Vorteil des erfindungsgemäßen Verfahrens besteht in einer starken Verminderung der Anzahl der notwendigen Verfahrensschritte zur Herstellung der genannten Teile. So ist ein Weglassen kostenintensiver Hochtemperaturschritte unter kontrollierter Gasatmosphäre möglich.

In Schritt c) wird das poröse Trägermaterial zusammen mit der darauf aufgebrachten Schicht des Elektrodenmaterials und/oder der Schicht des Katalysatormaterials auf eine vorgegebene Dicke gewalzt oder gepresst, die kleiner ist als deren ursprüngliche Dicke vor dem Walz- oder Pressvorgang.

Gemäß einer sehr vorteilhaften Ausführungsform des erfindungsgemäßen Verfahrens ist es vorgesehen, dass in dem porösen Trägermaterial eine Texturierung und/oder Profilierung erzeugt wird.

Gemäß einer bevorzugten Ausführungsform hiervon ist es vorgesehen, dass die Texturierung durch Walzen oder Pressen mittels eines Profilierungselements in Schritt c) erzeugt wird.

Gemäß einer alternativen Ausführungsform ist es vorgesehen, dass die Texturierung durch Walzen oder Pressen mittels eines Profilierungselements in einem zusätzlichen Schritt d) erzeugt wird.

Bei letzterer Ausführungsform ist es von Vorteil, das Walzen oder Pressen mittels des Profilierungselements in dem zusätzlichen Schritt d) nach dem Walzen oder Pressen gemäß dem Schritt c) vorzunehmen.

Gemäß einem vorteilhaften Aspekt des erfindungsgemäßen Verfahrens ist es vorgesehen, dass die Texturierung Gasführungskanäle an dem porösen Trägermaterial bildet, welche der Zu- oder Abführung von an dem elektrochemischen Energiewandler umgesetztem Gas dienen.

Gemäß einer Ausführungsform der erfindungsgemäßen Verfahrens ist das die Texturierung erzeugende Profilierungselement durch eine Walze oder ein Pressenteil gebildet, welche an der Oberfläche mit einer Profilierung versehen ist.

Gemäß einer alternativen Ausführungsform, welche von besonderem Vorteil ist, ist das die Texturierung erzeugende Profilierungselement durch ein separates Teil gebildet, welches zwischen einer Walze und dem porösen Trägermaterial durchläuft.

Gemäß einer bevorzugten Ausführungsform des erfindungsgemäßen Verfahrens ist das die Texturierung erzeugende Profilierungselement ein Gitter oder ein flächenartiges Profil.

Gemäß einer Ausführungsform hiervon ist das die Texturierung erzeugende Profilierungselement plattenförmig.

Gemäß einer alternativen Ausführungsform, welche von besonderem Vorteil ist, ist das die Texturierung erzeugende Profilierungselement ein umlaufendes Band, welches zwischen der Walze und dem porösen Trägermaterial umläuft.

Gemäß einer zusätzlichen Ausgestaltung des erfindungsgemäßen Verfahrens ist es vorgesehen, dass vor dem Walzen oder Pressen ein Trocknungs-, Brenn- oder Sintervorgang stattfindet.

Gemäß einer weiteren Ausgestaltung des erfindungsgemäßen Verfahrens ist es vorgesehen, dass nach dem Walzen oder Pressen ein Brenn- oder Sintervorgang stattfindet.

Gemäß einer vorteilhaften Weiterbildung des erfindungsgemäßen Verfahrens wird eine Schicht eines Elektrodenmaterials auf der einen Seite des porösen Trägermaterials aufgebracht und eine Schicht eines Katalysatormaterials auf der gegenüberliegenden Seite des porösen Trägermaterials aufgebracht.

Gemäß einer alternativen Ausführungsform des erfindungsgemäßen Verfahrens wird auf das poröse Trägermaterial eine Schicht eines Elektrodenmaterials aufgebracht und auf die Schicht des Elektrodenmaterials wird eine Schicht eines Elektrolytmatrixmaterials aufgebracht.

Das poröse Trägermaterial ist ein poröses Sintermetall oder ein Metallschaum und wird durch ein Karbonylverfahren, Abscheiden, Galvanisieren oder Aufschäumen hergestellt. Das Metall kann mittels galvanischem, chemischem, PVD- und CVD-Verfahren auf einem vorgeformten Polyurethanschaum abgeschieden werden.

Gemäß einer besonders vorteilhaften Ausführungsform des erfindungsgemäßen Verfahrens erfolgt das Aufbringen der Schicht des Elektrodenmaterials und/oder der Schicht des Katalysatormaterials durch Sprühen eines sprühfähigen Elektrodenrohmaterials bzw. eines sprühfähigen Katalysatormaterials.

Gemäß einer alternativen Ausführungsform des erfindungsgemäßen Verfahrens kann das Aufbringen der Schicht des Elektrodenmaterials durch Rakeln eines zähflüssigen oder pastösen Elektrodenrohmaterials auf das Trägermaterial erfolgen.
Gemäß einer anderen alternativen Ausführungsform des erfindungsgemäßen Verfahrens kann das Aufbringen der Schicht des Elektrodenmaterials durch Gießen, Foliengießen oder Tauchen eines flüssigen Elektrodenrohmaterials auf das poröse Trägermaterial erfolgen.

Gemäß einer weiteren sehr vorteilhaften Ausführungsform der Erfindung kann das Aufbringen der Schicht des Elektrolytmatrixmaterials durch Sprühen eines sprühfähigen Matrixrohmaterials erfolgen.

Gemäß einer alternativen Ausführungsform des erfindungsgemäßen Verfahrens kann das Aufbringen der Schicht des Elektrolytmatrixmaterials durch Rakeln, Gießen, Foliengießen, eines flüssigen, zähflüssigen, pastösen oder plastischen Matrixrohmaterials erfolgen.

Gemäß einem sehr vorteilhaften Aspekt des erfindungsgemäßen Verfahrens werden mit diesem Elektroden, Komponenten, Halbzellen oder Zellen für eine Brennstoffzellenanordnung hergestellt.

Gemäß einem anderen sehr vorteilhaften Aspekt des erfindungsgemäßen Verfahrens werden mit diesem Elektroden, Komponenten, Halbzellen oder Zellen für eine Elektrolysezellenanordnung hergestellt.

Im folgenden werden Ausführungsbeispiele der Erfindung anhand der Zeichnung erläutert.
Es zeigen:
Figur 1 eine schematisierte Darstellung eines ersten Ausführungsbeispiels des erfindungsgemäßen Verfahrens, wobei in Figur 1a), b) und c) verschiedene Abwandlungen desselben gezeigt sind;
Figur 2 eine schematisierte Darstellung eines zweiten Ausführungsbeispiels des erfindungsgemäßen Verfahrens;
Figur 3 und 4 in einer schematisierten vergrößerten Querschnittsansicht einen Ausschnitt von Figur 1, welcher eine Schicht eines Elektrodenmaterials auf einer Schicht eines porösen Trägermaterials zeigt, bzw. eine perspektivische Darstellung des porösen Trägermaterials alleine.

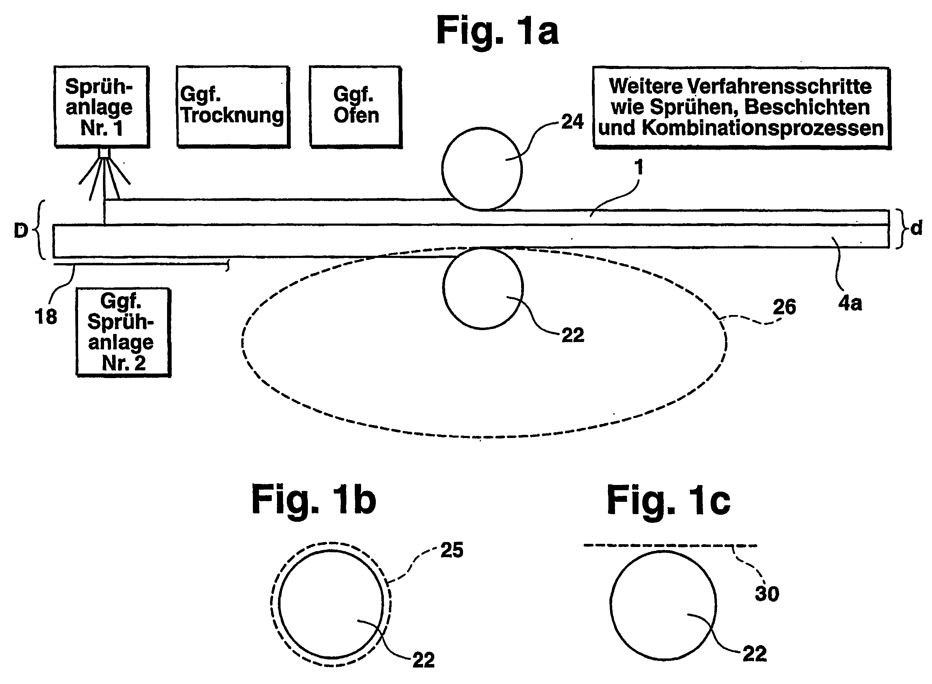

Figur 1 zeigt eine schematisierte Darstellung der Durchführung des Verfahrens zur Herstellung von Elektroden, Komponenten, Halbzellen und Zellen für elektrochemische Energiewandler gemäß einem Ausführungsbeispiel der Erfindung. Im vorliegenden Fall kann es sich beispielsweise um die Herstellung einer Halbzelle für eine Schmelzkarbonatbrennstoffzelle handeln. Das Bezugszeichen 4a bedeutet ein flächenartiges poröses Trägermaterial, welches durch ein Karbonylverfahren, Abscheiden, Galvanisieren oder Aufschäumen hergestellt wurde. Beispielsweise kann es sich bei dem Trägermaterial um ein Nickel-Schaum-Material mit einem Feststoffgehalt von 4 % bis ca. 35 % oder ein poröses Nickel-Sintermaterial handeln.

Auf das poröse Trägermaterial 4a wird eine Schicht eines Elektrodenmaterials 1 aufgebracht. Bei dem Elektrodenmaterial 1 kann es sich bei dem dargestellten Ausführungsbeispiel vorzugsweise um eine Schicht eines Anodenmaterials handeln. Das poröse Trägermaterial 4a wird zusammen mit der darauf aufgebrachten Schicht des Elektrodenmaterials 1 mittels Walzen 22, 24 auf eine vorgegebene Dicke d gewalzt, wobei zwei Walzen 22, 24 einander gegenüberliegend angeordnet sein können. Die vorgegebene Dicke d, auf die das poröse Trägermaterial 4a zusammen mit der darauf befindlichen Schicht des Elektrodenmaterials 1 gewalzt wird, ist kleiner als deren ursprüngliche Dicke D vor dem Walzvorgang. Alternativ kann, wie jedoch nicht dargestellt, an Stelle des Walzens durch Pressen eine ebene oder strukturierte Oberfläche erzielt werden. Der Walzvorgang kann im folgenden jeweils auch durch einen Pressvorgang ersetzt werden. Beim Walzen oder Pressen wird das poröse Trägermaterial und/oder das Elektrodenmaterial in der Dicke reduziert.

In dem porösen Trägermaterial 4 wird auf der der Elektrode 1 abgewandten Seite eine Texturierung mittels eines Profilierungselements erzeugt. Bei dem in Figur 1a) dargestellten Ausführungsbeispiel ist das Profilierungselement 26 ein separates Teil, welches in Form eines Gitters oder eines flächenartigen Profils ausgebildet ist und als umlaufendes Band zwischen der Walze 24 und dem porösen Trägermaterial 4a umläuft.

Bei Verwendung einer Presse würde analog anstelle eines umlaufenden Bandes ein ebenes Bauteil zwischen Pressenteil und Trägermaterial eingelegt werden.

Alternativ kann, wie in Figur 1b) gezeigt ist, das Profilierungselement auch durch eine Walze 25 oder ein Pressenteil gebildet sein, welche an der Oberfläche mit einer Profilierung 29 versehen ist und anstelle der Walze 22 in Figur 1a) verwendet wird.

Gemäß einer anderen Alternative, welche in Figur 1 c) dargestellt ist, kann das die Texturierung erzeugende Profilierungselement auch durch ein separates Teil 30 gebildet sein, welches als Gitter oder flächenartiges Profil ausgebildet ist, plattenförmig ist und zwischen der Walze 22 und dem porösen Trägermaterial 4a durchgeführt wird.

Bei den in Figur 1a) bis c) gezeigten Ausführungsbeispielen wird die Texturierung durch Walzen mittels des Profilierungselements 26 (Figur 1a)) bzw. des Profilierungselements 25, 29 (Figur 1b)) bzw. mittels des Profilierungselements 30 (Figur 1c)) während des Walzens des porösen Trägermaterials 4a zusammen mit der darauf aufgebrachten Elektrodenmaterialschicht 1 auf die vorgegebene Dicke d erzeugt. Alternativ kann die Texturierung auch durch Walzen mittels eines entsprechenden Profilierungselements 26; 25, 29; 30 in einem zusätzlichen Verfahrensschritt erzeugt werden, welcher vorzugsweise nach dem Walzen auf die vorgegebene Dicke d durchgeführt wird.

Wiederum bezugnehmend auf Figur 1a) ist auf deren linker Seite ein weiteres Ausführungsbeispiel ersichtlich, bei welchem eine Schicht eines Katalysatormaterials 18 auf das poröse Trägermaterial 4a aufgebracht wird, nämlich auf die der Elektrode 1 gegenüberliegende Seite des porösen Trägermaterials 4a. Bei der Katalysatorschicht 18 handelt es sich um eine solche, welche der internen Reformierung des Brenngases im Inneren einer Brennstoffzellenanordnung dient, wobei die Elektrode 1 die Anode bildet und die Katalysatorschicht 18 auf der entgegengesetzten Seite derselben auf dem porösen Trägermaterial 4a befindlich ist. In diesem Falle wird dann das poröse Trägermaterial 4a zusammen mit der darauf aufgebrachten Schicht es Elektrodenmaterials 1 und der Schicht des Katalysatormaterials 18 auf die vorgegebene Dicke d gewalzt, wobei eine ebene und glatte oder strukturierte Oberfläche erzeugt wird, mit der Ausnahme der durch das Profilierungselement 26; 25, 29; 30 erzeugten Texturierung.

Das Aufbringen der Schicht des Elektrodenmaterials 1 erfolgt vorzugsweise durch Sprühen eines sprühfähigen Elektrodenrohmaterials, wie auch das Aufbringen der gegebenenfalls vorgesehenen Schicht des Katalysatormaterials 18 durch Sprühen eines sprühfähigen Katalysatormaterials erfolgt.

Zusätzlich können, wie in Figur 1 dargestellt ist, weitere Verfahrensschritte bei der Herstellung von Elektroden, Komponenten, Halbzellen oder Zellen für elektrochemische Energiewandler durchgeführt werden. So kann vor dem Walzen ein Trocknungs-, Brennoder Sintervorgang vorgenommen werden. Nach dem Walzen können ebenfalls Brennoder Sintervorgänge durchgeführt werden oder weitere Verfahrensschritte wie Sprühen, Beschichten oder Kombinationsprozesse durchgeführt werden.

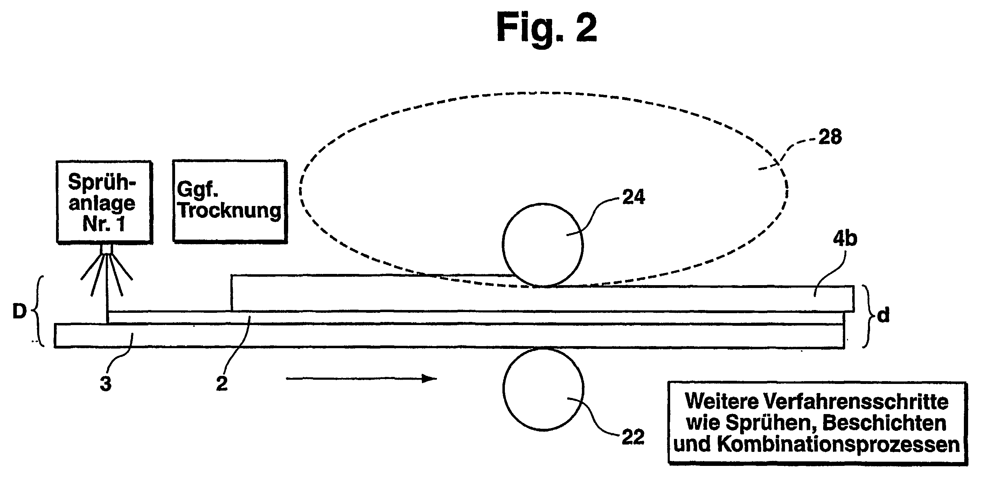

Figur 2 zeigt ein Ausführungsbeispiel des erfindungsgemäßen Verfahrens, bei dem ähnlich wie bei Figur 1 eine Schicht eines Elektrodenmaterials 2 auf ein poröses Trägermaterial 4b aufgebracht wird. Das poröse Trägermaterial 4b wird wiederum zusammen mit dem Elektrodenmaterial 2 auf eine vorgegebene Dicke d gewalzt, wobei eine ebene und glatte Oberfläche erzeugt wird. Auf das poröse Trägermaterial 4b ist jedoch zusätzlich zu der Schicht des Elektrodenmaterials 2 noch eine Schicht eines Elektrolytmatrixmaterials 3 aufgebracht. Bei dem dargestellten Ausführungsbeispiel handelt es sich bei der Schicht des Elektrodenmaterials 2 vorzugsweise um Elektrodenmaterial für eine Kathode, so dass das poröse Trägermaterial 4b die Kathode 2 trägt und die Kathode 2 ihrerseits die Elektrolytmatrix 3 trägt. Das poröse Trägermaterial 4b wird somit zusammen mit der Schicht des Elektrodenmaterials 2 und der Schicht des darauf befindlichen Elektrolytmatrixmaterial 3 auf die vorgegebene Dicke d gewalzt, welche kleiner als die ursprüngliche Dicke D dieser Schichten vor dem Walzvorgang ist.

In dem porösen Trägermaterial 4b wird mittels eines Profilierungselements 28 eine Texturierung erzeugt. Das Profilierungselement 28 ist bei dem hier dargestellten Ausführungsbeispiel durch ein separates Teil gebildet, welches in Form eines Gitters oder eines flächenartiges Profil und als umlaufendes Band vorliegt, welches zwischen der Walze 24 und dem porösen Trägermaterial 4b umläuft.

Ähnlich wie bei den in Figur 1a) bis c) gezeigten Ausführungsbeispielen kann das Profilierungselement auch durch eine Walze gebildet sein, welche an ihrer Oberfläche mit einer Profilierung versehen ist und anstelle der Walze 24 in Figur 2 verwendet wird, oder das die Texturierung erzeugende Profilierungselement kann auch durch ein separates Teil gebildet sein, welches als Gitter oder flächenartiges Profil ausgebildet ist, plattenförmig ist und zwischen der Walze 24 und dem porösen Trägermaterial 4b durchgeführt wird.

Die Texturierung wird während des Walzens des porösen Trägermaterials 4b zusammen mit der darauf aufgebrachten Schichten auf die vorgegebene Dicke d erzeugt. Alternativ kann die Texturierung auch durch Walzen mittels eines entsprechenden Profilierungselements in einem zusätzlichen Verfahrensschritt erzeugt werden, welcher vorzugsweise nach dem Walzen auf die vorgegebene Dicke d durchgeführt wird.

Wie auch bei dem in Figur 1 dargestellten Ausführungsbeispiel können vor dem Walzen zusätzlich ein Trocknungs-, ein Brenn- oder ein Sintervorgang stattfinden, wie auch nach dem Walzen ein Brenn- oder ein Sintervorgang oder zusätzliche Verfahrensschritte wie Sprühen, Beschichten oder Kombinationsprozesse ausgeführt werden können.

Ebenfalls wie bei dem in Figur 1 dargestellten Ausführungsbeispiel kann das Herstellen des flächenartigen porösen Trägermaterials 4b durch ein Karbonylverfahren, Abscheiden, Galvanisieren oder Aufschäumen erfolgen. Das Aufbringen der Schicht des Elektrodenmaterials 2 kann vorzugsweise durch Sprühen eines sprühfähigen Rohmaterials erfolgen. Alternativ kann das Aufbringen der Schicht des Elektrodenmaterials 2 auch durch Rakeln eines zähflüssigen oder pastösen Elektrodenrohmaterials auf das poröse Trägermaterial 4b erfolgen.

Gemäß einer weiteren Alternative kann das Aufbringen der Schicht des Elektrodenmaterials 2 auch durch Gießen, Foliengießen oder Tauchen eines flüssigen Elektrodenrohmaterials auf das poröse Trägermaterial 4b erfolgen.

Das Aufbringen der Schicht des Elektrolytmatrixmaterials 3 erfolgt vorzugsweise durch Sprühen eines sprühfähigen Matrixrohmaterials. Alternativ kann das Aufbringen der Schicht des Elektrolytmatrixmaterials 3 auch durch Rakeln, Gießen oder Foliengießen eines flüssigen, zähflüssigen, pastösen oder plastischen Matrixrohmaterials vorgenommen werden.

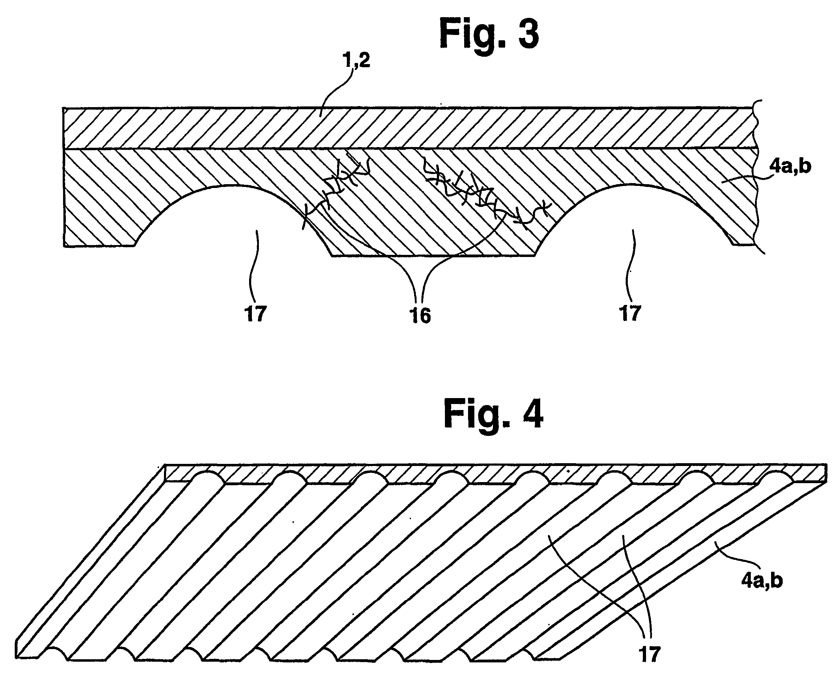

Wie Figur 3 und Figur 4 schematisch zeigt, werden gemäß einem Aspekt der Erfindung durch die Texturierung, welche mittels des Profilierungselements 26; 28; 25, 29; 30 durchgeführt wird, Transportkanäle 17 für gasförmige oder flüssige Medien an dem porösen Trägermaterial 4a; 4b gebildet, welche der Zu- oder Abführung von an dem elektrochemischen Energiewandler umgesetztem Gas dienen.

Wie bei der in Figur 3 gezeigten vergrößerten Querschnittsdarstellung, welche ein flächenartiges poröses Trägermaterial 4a; 4b mit einer darauf aufgebrachten Elektrode 1, 2 zeigt, zu sehen ist, sind durch die Texturierung (makroskopische) Gasführungskanäle 17 geschaffen, die bei dem dargestellten Ausführungsbeispiel an der der jeweiligen Elektrode 1; 2 abgewandten Oberfläche des porösen Trägermaterials 4a; 4b ausgebildet sind. Im Inneren der porösen Trägerstruktur sind auf Grund der Porosität im Inneren der porösen Struktur (mesoskopische) Strömungswege 16 gebildet, welche das Gas, beispielsweise das Brenngas, bzw. das Kathodengas einer Brennstoffzelle, zwischen den Transportkanälen 17 und der betreffenden Elektrode 1; 2 transportieren.

Figur 4 zeigt eine perspektivische Darstellung des porösen Trägermaterials 4a; 4b, aus welcher der Verlauf der Transportkanäle 17 an der Oberfläche der porösen Struktur ersichtlich ist. Anstelle der gezeigten einfachen Transportkanäle 17 kann die Texturierung in dem porösen Trägermaterial 4a; 4b jedoch auch kompliziertere Muster umfassen.

### Bezugszeichenliste

- 1: Anode
- 2: Kathode
- 3: Elektrolytmatrix
- 4a; 4b: poröses Trägermaterial
- 16: Strömungswege
- 17: Strömungswege
- 18: Katalysatorschicht
- 22: Walze
- 24: Walze
- 25: Walze
- 26: Profilierurigselement
- 28: Profilierungselement
- 29: Profilierung
- 30: Profilierungselement

## Patentansprüche

1. Verfahren zur Herstellung von Elektroden, Komponenten, Halbzellen und Zellen für elektrochemische Energiewandler, **gekennzeichnet durch** folgende Verfahrensschritte:
a) Herstellen eines flächenartigen porösen Trägermaterials (4a; 4b);
b) Aufbringen von zumindest einer Schicht eines Elektrodenmaterials (1; 2) und/oder einer Schicht eines Katalysatormaterials (18) auf das poröse Trägermaterial (4a; 4b);
c) Walzen oder Pressen des porösen Trägermaterials (4a; 4b) zusammen mit der darauf aufgebrachten Schicht des Elektrodenmaterials (1; 2) und/oder der Schicht des Katalysatormaterials (18) auf eine vorgegebene Dicke (d) unter Erzeugung einer ebenen und glatten oder strukturierten Oberfläche, wobei zumindest das poröse Trägermaterial (4a; 4b) in der Dicke reduziert wird.

2. Verfahren nach Anspruch 1, **dadurch gekennzeichnet, dass** in Schritt c) die auf dem porösen Trägermaterial (4a; 4b) aufgebrachte Schicht des Elektrodenmaterials (1; 2) oder die Schicht des Katalysatormaterials (18) in der Dicke reduziert wird.

3. Verfahren nach Anspruch 1 oder 2, **dadurch gekennzeichnet, dass** in dem porösen Trägermaterial (4a; 4b) eine Texturierung erzeugt wird.

4. Verfahren nach Anspruch 3, **dadurch gekennzeichnet, dass** die Texturierung durch Walzen oder Pressen mittels eines Profilierungselements (25, 29; 26; 28; 30) in Schritt c) erzeugt wird.

5. Verfahren nach Anspruch 3, **dadurch gekennzeichnet, dass** die Texturierung durch Walzen oder Pressen mittels eines Profilierungselements (25, 29; 26; 28; 30) in einem zusätzlichen Schritt d) erzeugt wird.

6. Verfahren nach Anspruch 5, **dadurch gekennzeichnet, dass** das Walzen oder Pressen mittels des Profilierungselements (25, 29; 26; 28; 30) in dem zusätzlichen Schritt d) nach dem Walzen oder Pressen gemäß Schritt c) erfolgt.

7. Verfahren nach Anspruch 3, 4, 5 oder 6, **dadurch gekennzeichnet, dass** die Texturierung Transportkanäle (17) an dem porösen Trägermaterial (4a; 4b) bildet, welche der Zu- oder Abführung von an dem elektrochemischen Energiewandler umgesetztem Medium (Gas) dienen.

8. Verfahren nach einem der Ansprüche 4 bis 7, **dadurch gekennzeichnet, dass** das die Texturierung erzeugende Profilierungselement durch eine Walze (25) oder ein Pressteil gebildet ist, welches an der Oberfläche mit einer Profilierung (29) versehen ist.

9. Verfahren nach einem der Ansprüche 4 bis 7, **dadurch gekennzeichnet, dass** das die Texturierung erzeugende Profilierungselement durch ein separates Teil (26; 28; 30) gebildet ist, welches zwischen einer Walze (22; 24) oder dem Pressenteil und dem porösen Trägermaterial (4a; 4b) liegt.

10. Verfahren nach Anspruch 9, **dadurch gekennzeichnet, dass** das die Texturierung erzeugende Profilierungselement (26; 28; 30) ein Gitter oder ein flächenartiges Profil ist

11. Verfahren nach Anspruch 9 oder 10, **dadurch gekennzeichnet, dass** das die Texturierung erzeugende Profilierungselement (30) plattenförmig ist.

12. Verfahren nach Anspruch 9 oder 10, **dadurch gekennzeichnet, dass** das die Texturierung erzeugende Profilierungselement (26; 28) ein umlaufendes Band ist, welches zwischen der Walze (22; 24) und dem porösen Trägermaterial (4a; 4b) umläuft.

13. Verfahren nach einem der Ansprüche 1 bis 12, **dadurch gekennzeichnet, dass** vor dem Walzen oder Pressen ein Trocknungs-, Brenn- oder Sintervorgang stattfindet.

14. Verfahren nach einem der Ansprüche 1 bis 13, **dadurch gekennzeichnet, dass** nach dem Walzen oder Pressen ein Brenn- oder Sintervorgang stattfindet.

15. Verfahren nach einem der Ansprüche 1 bis 14, **dadurch gekennzeichnet, dass** eine Schicht eines Elektrodenmaterials (1) auf der einen Seite des porösen Trägermaterials (4a) aufgebracht wird, und dass eine Schicht eines Katalysatormaterials (18) auf der gegenüberliegenden Seite des porösen Trägermaterials (4a) aufgebracht wird.

16. Verfahren nach einem der Ansprüche 1 bis 15, **dadurch gekennzeichnet, dass** auf das poröse Trägermaterial (4b) eine Schicht eines Elektrodenmaterials (2) aufgebracht wird, und dass auf die Schicht des Elektrodenmaterials (2) eine Schicht eines Elektrolytmatrixmaterials (3) aufgebracht wird.

17. Verfahren nach einem der Ansprüche 1 bis 16, **dadurch gekennzeichnet, dass** das Herstellen des flächenartigen porösen Trägermaterials (4a; 4b) durch ein Karbonylverfahren, Abscheiden, Galvanisieren oder Aufschäumen erfolgt.

18. Verfahren nach einem der Ansprüche 1 bis 17, **dadurch gekennzeichnet, dass** das Aufbringen der Schicht des Elektrodenmaterials (1; 2) und/oder der Schicht des Katalysatormaterials (18) durch Sprühen eines sprühfähigen Elektrodenrohmaterials bzw. eines sprühfähigen Katalysatormaterials erfolgt.

19. Verfahren nach einem der Ansprüche 1 bis 17, **dadurch gekennzeichnet, dass** das Aufbringen der Schicht des Elektrodenmaterials (1; 2) durch Rakeln eines zähflüssigen oder pastösen Elektrodenrohmaterials auf das Trägermaterial (4a; 4b) erfolgt.

20. Verfahren nach einem der Ansprüche 1 bis 17, **dadurch gekennzeichnet, dass** das Aufbringen der Schicht des Elektrodenmaterials (1; 2) durch Gießen, Foliengießen oder Tauchen eines flüssigen Elektrodenrohmaterials auf das poröse Trägermaterial (4a; 4b) erfolgt.

21. Verfahren nach einem der Ansprüche 1 bis 20, **dadurch gekennzeichnet, dass** das Aufbringen der Schicht des Elektrolytmatrixmaterials (3) durch Sprühen eines sprühfähigen Matrixrohmaterials erfolgt.

22. Verfahren nach einem der Ansprüche 1 bis 20, **dadurch gekennzeichnet, dass** das Aufbringen der Schicht des Elektrolytmatrixmaterials (3) durch Rakeln, Gießen, Foliengießen, eines flüssigen, zähflüssigen, pastösen oder plastischen Rohmaterials erfolgt.

23. Verwendung eines Verfahrens nach einem der Ansprüche 1 bis 22 zur Herstellung von Elektroden, Komponenten, Halbzellen oder Zellen für eine Brennstoffzellenanordnung.

24. Verwendung eines Verfahrens nach einem der Ansprüche 1 bis 22 zur Herstellung von Elektroden, Komponenten, Halbzellen oder Zellen für eine Elektrolysezellenanordnung.

## Claims

1. Method for producing electrodes, components, half cells and cells for electrochemical energy converters, **characterized by** the following method steps:
a) production of a sheet-like, porous support material (4a; 4b);
b) application of at least one layer of an electrode material (1; 2) and/or of a catalyst material (18) to the porous support material (4a; 4b);
c) rolling or pressing of the porous support material (4a; 4b) together with the applied layer of electrode material (1; 2) and/or of catalyst material (18) to a predetermined thickness (d), so as to generate a planar and smooth or structured surface, with the thickness of at least the porous support material (4a; 4b) being reduced.

2. Method according to Claim 1, **characterized in that** in step c) the thickness of the layer of electrode material (1; 2) or catalyst material (18) which has . been applied to the porous support material (4a; 4b) is reduced.

3. Method according to Claim 1 or 2, **characterized in that** a texturing is generated in the porous support material (4a; 4b).

4. Method according to Claim 3, **characterized in that** the texturing is generated by rolling or pressing by means of a profiling element (25, 29; 26; 28; 30) in step c).

5. Method according to Claim 3, **characterized in that** the texturing is generated by rolling or pressing by means of a profiling element (25, 29; 26; 28; 30) in an additional step d).

6. Method according to Claim 5, **characterized in that** the rolling or pressing by means of the profiling element (25, 29; 26; 28; 30) in the additional step d) takes place after the rolling or pressing in accordance with step c).

7. Method according to Claim 3, 4, 5 or 6, **characterized in that** the texturing forms transport channels (17) on the porous support material (4a; 4b), which are used to supply or discharge medium (gas) which is reacted at the electrochemical energy converter.

8. Method according to one of Claims 4 to 7, **characterized in that** the profiling element which generates the texturing is formed by a roll (25) or press part which is provided with a profiling (29) on the surface.

9. Method according to one of Claims 4 to 7, **characterized in that** the profiling element which generates the texturing is formed by a separate part (26; 28; 30) which is located between a roll (22; 24) or the press part and the porous support material (4a; 4b).

10. Method according to Claim 9, **characterized in that** the profiling element (26; 28; 30) which generates the texturing is a grid or a sheet-like profile.

11. Method according to Claim 9 or 10, **characterized in that** the profiling element (30) which generates the texturing is in plate form.

12. Method according to Claim 9 or 10, **characterized in that** the profiling element (26; 28) which generates the texturing is a revolving belt which revolves between the roll (22; 24) and the porous support material (4a, 4b).

13. Method according to one of Claims 1 to 12, **characterized in that** a drying, firing or sintering operation takes place prior to the rolling or pressing.

14. Method according to one of Claims 1 to 13, **characterized in that** a firing or sintering operation takes place after the rolling or pressing.

15. Method according to one of Claims 1 to 14, **characterized in that** a layer of an electrode material (1) is applied to one side of the porous support material (4a), and **in that** a layer of a catalyst material (18) is applied to the opposite side of the porous support material (4a).

16. Method according to one of Claims 1 to 15, **characterized in that** a layer of an electrode material (2) is applied to the porous support material (4b), and **in that** a layer of an electrolyte matrix material (3) is applied to the layer of the electrode material (2).

17. Method according to one of Claims 1 to 16, **characterized in that** the sheet-like, porous support material (4a; 4b) is produced by a carbonyl process, deposition, electroplating or foaming.

18. Method according to one of Claims 1 to 17, **characterized in that** the application of the layer of the electrode material (1; 2) and/or of the layer of the catalyst material (18) is effected by spraying a sprayable electrode raw material and/or a sprayable catalyst material.

19. Method according to one of Claims 1 to 17, **characterized in that** the application of the layer of electrode material (1; 2) is effected by blade-spreading of a viscous or pasty raw material onto the support material (4a; 4b).

20. Method according to one of Claims 1 to 17, **characterized in that** the layer of electrode material (1; 2) is applied by pouring, tape casting or dip coating of a liquid electrode raw material onto the porous support material (4a, 4b).

21. Method according to one of Claims 1 to 20, **characterized in that** the layer of electrolyte matrix material (3) is applied by spraying a sprayable matrix raw material.

22. Method according to one of Claims 1 to 20, **characterized in that** the layer of electrolyte matrix material (3) is applied by blade-spreading, pouring, tape casting of a liquid, viscous, pasty or plastic raw material.

23. Use of a method according to one of Claims 1 to 22 for the production of electrodes, components, half cells or cells for a fuel cell arrangement.

24. Use of a method according to one of Claims 1 to 22 for the production of electrodes, components, half cells or cells for an electrolysis cell arrangement.

## Revendications

1. Procédé de fabrication d'électrodes, de composants, de demi-cellules et de cellules pour des convertisseurs électrochimiques d'énergie, **caractérisé par** les étapes suivantes:
a) fabrication d'un matériau de support poreux plat (4a; 4b);
b) application d'au moins une couche d'un matériau d'électrode (1; 2) et/ou d'une couche d'un matériau de catalyseur (18) sur le matériau poreux de support (4a; 4b),
c) laminage ou pressage jusqu'à une épaisseur (d) prédéterminée du matériau poreux de support (4a; 4b) en même temps que la couche du matériau d'électrode (1; 2) et/ou de la couche de matériau de catalyseur (18) qui y sont appliquées, avec formation d'une surface plane et lisse ou d'une surface structurée, l'épaisseur d'au moins le matériau poreux de support (4a; 4b) étant diminuée.

2. Procédé selon la revendication 1, **caractérisé en ce que** dans l'étape c), l'épaisseur de la couche du matériau d'électrode (1; 2) ou de la couche du matériau de catalyseur (18) appliquées sur le matériau poreux de support (4a; 4b) est diminuée.

3. Procédé selon les revendications 1 ou 2, **caractérisé en ce qu'**une texturation est créée dans le matériau poreux de support (4a; 4b).

4. Procédé selon la revendication 3, **caractérisé en ce que** la texturation est créée dans l'étape c) par laminage ou pressage au moyen d'un élément de profilation (25, 29; 26; 28; 30).

5. Procédé selon la revendication 3, **caractérisé en ce que** la texturation est créée dans une étape d) supplémentaire par laminage ou pressage au moyen d'un élément de profilation (25, 29; 26; 28; 30).

6. Procédé selon la revendication 5, **caractérisé en ce que** le laminage ou le pressage au moyen de l'élément de profilation (25, 29; 26; 28; 30) s'effectue dans l'étape supplémentaire d) qui suit le laminage ou le pressage de l'étape c).

7. Procédé selon les revendications 3, 4, 5 ou 6, **caractérisé en ce que** la texturation forme sur le matériau poreux de support (4a; 4b) des canaux de transport (17) qui servent à amener ou évacuer un fluide (gaz) converti sur le convertisseur électrochimique d'énergie.

8. Procédé selon l'une des revendications 4 à 7, **caractérisé en ce que** l'élément de profilation qui crée la texturation est formé par un cylindre (25) ou une pièce de pressage qui sont dotés sur leur surface d'une profilation (29).

9. Procédé selon l'une des revendications 4 à 7, **caractérisé en ce que** l'élément de profilation qui crée la texturation est formé par une pièce séparée (26; 28; 30) qui est placée entre un cylindre (22; 24) ou la pièce de pressage et le matériau poreux de support (4a; 4b).

10. Procédé selon la revendication 9, **caractérisé en ce que** l'élément de profilation (26; 28; 30) qui crée la texturation est une grille ou un profil plat.

11. Procédé selon les revendications 9 ou 10, **caractérisé en ce que** l'élément de profilation (30) qui crée la texturation a la forme d'une plaque.

12. Procédé selon les revendications 9 ou 10, **caractérisé en ce que** l'élément de profilation (26; 28) qui crée la texturation est une bande sans fin qui passe entre le cylindre (22; 24) et le matériau poreux de support (4a; 4b).

13. Procédé selon l'une des revendications 1 à 12, **caractérisé en ce qu'**une opération de séchage, de cuisson ou de frittage a lieu avant le laminage ou le pressage.

14. Procédé selon l'une des revendications 1 à 13, **caractérisé en ce qu'**une opération de cuisson ou de frittage a lieu après le laminage ou le pressage.

15. Procédé selon l'une des revendications 1 à 14, **caractérisé en ce qu'**une couche d'un matériau d'électrode (1) est appliquée sur un des côtés du matériau poreux de support (4a) et **en ce qu'**une couche d'un matériau de catalyseur (18) est appliquée sur le côté opposé du matériau poreux de support (4a).

16. Procédé selon l'une des revendications 1 à 15, **caractérisé en ce qu'**une couche d'un matériau d'électrode (2) est appliquée sur le matériau poreux de support (4b) et **en ce qu'**une couche d'un matériau de matrice d'électrolyte (3) est appliquée sur la couche de matériau d'électrode (2).

17. Procédé selon l'une des revendications 1 à 16, **caractérisé en ce que** la fabrication du matériau poreux de support (4a; 4b) plat s'effectue par une opération de carbonylation, un dépôt, une galvanisation ou un moussage.

18. Procédé selon l'une des revendications 1 à 17, **caractérisé en ce que** l'application de la couche du matériau d'électrode (1; 2) et/ou de la couche du matériau de catalyseur (18) s'effectue par pulvérisation d'un matériau brut d'électrode pulvérisable ou d'un matériau de catalyseurur pulvérisable.

19. Procédé selon l'une des revendications 1 ou 17, **caractérisé en ce que** l'application de la couche du matériau d'électrode (1; 2) s'effectue par raclage d'un matériau brut d'électrode visqueux ou pâteux sur le matériau de support (4a; 4b).

20. Procédé selon l'une des revendications 1 ou 17, **caractérisé en ce que** l'application de la couche du matériau d'électrode (1; 2) sur le matériau poreux de support (4a; 4b) s'effectue par coulée ou coulée en film d'un matériau brut d'électrode liquide ou immersion dans ce dernier.

21. Procédé selon l'une des revendications 1 à 20, **caractérisé en ce que** l'application de la couche du matériau de matrice d'électrolyte (3) s'effectue par pulvérisation d'un matériau brut de matrice pulvérisable.

22. Procédé selon l'une des revendications 1 à 20, **caractérisé en ce que** l'application de la couche du matériau de matrice d'électrolyte (3) s'effectue par raclage, coulée ou coulée en film d'un matériau brut liquide, visqueux, pâteux ou plastique.

23. Utilisation d'un procédé selon l'une des revendications 1 à 22 pour fabriquer des électrodes, des composants, des demi-cellules ou des cellules pour un agencement de cellules à combustible.

24. Utilisation d'un procédé selon l'une des revendications 1 à 22 pour fabriquer des électrodes, des composants, des demi-cellules ou des cellules pour un agencement de cellules d'électrolyse.
